# EUROPEAN PATENT APPLICATION

(11) **EP 4 696 595 A1**
(43) Date of publication of application: **18.02.2026**
(21) Application number: 25189528.0
(22) Date of filing: 15.07.2025
(51) Int. Cl.: B62J 35/00, B60K 15/01, B62J 37/00, F02M 25/08, B62J 25/04

(54) **STRADDLED VEHICLE**

(30) Priority: 15.08.2024 CN 202411122015
(71) Applicant: Yamaha Hatsudoki Kabushiki Kaisha, Iwata-shi, Shizuoka 438-8501 (JP)
(72) Inventor: Shimada, Taku, Shanghai, 200241 (CN); Qin, Zhu, Shanghai, 200241 (CN)
(74) Representative: Grünecker Patent- und Rechtsanwälte PartG mbB

(57) **Abstract**

The present straddled vehicle (1) includes a vehicle body frame (2), a leg shield (19), a seat (6), a storage box (9), a footboard (20), a slant portion (21), a fuel tank (25), and a canister (29). The vehicle body frame (2) includes a head pipe (11). The leg shield (19) is disposed behind the head pipe (11). The seat (6) is disposed behind the leg shield (19). The storage box (9) is disposed below the seat (6). The footboard (20) is disposed between the leg shield (19) and the seat (6). The slant portion (21) includes a footrest surface. The slant portion (21) is disposed between the leg shield (19) and the footboard (20) and slants up forward with respect to the footboard (20). The fuel tank (25) is disposed below the footboard (20). The canister (29) is disposed below the slant portion (21) and is connected to the fuel tank (25).

## Description

The present invention relates to a straddled vehicle.

There has been conventionally known a type of straddled vehicle including a canister for storing evaporative fuel from a fuel tank (see JP 5774129 B2). In the straddled vehicle described JP 5774129 B2, a storage box is installed below a seat; then, the canister is disposed below the storage box.

When the canister is disposed below the storage box, it is required to reliably produce a space for disposing the canister below the storage box; hence, it is concerned that the storage box is reduced in storage space.

It is an object of the present invention to provide a straddled vehicle that a storage box, disposed below a seat, can be inhibited from being reduced in storage space. According to the present invention said object is solved by a straddled vehicle having the features of independent claim 1. Preferred embodiments are laid down in the dependent claims.

Accordingly, the straddled vehicle includes a vehicle body frame, a leg shield, a seat, a storage box, a footboard, a slant portion, a fuel tank, and a canister. The vehicle body frame includes a head pipe. The leg shield is disposed behind the head pipe. The seat is disposed behind the leg shield. The storage box is disposed below the seat. The footboard is disposed between the leg shield and the seat. The slant portion includes a footrest surface. The slant portion is disposed between the footboard and the leg shield and slants up forward with respect to the footboard. The fuel tank is disposed below the footboard. The canister is disposed below the slant portion and is connected to the fuel tank.

In the straddled vehicle according to the present aspect, the canister is disposed below the slant portion disposed between the leg shield and the footboard; hence, it is made possible to inhibit the storage box, disposed below the seat, from being reduced in storage space in comparison with a configuration that the canister is disposed below the storage box. Besides, a space below the slant portion including the footrest surface can be effectively utilized; simultaneously, a rider is enabled to put the foot not only on the footboard but also on the footrest surface of the slant portion.

The vehicle body frame may include a subframe that is disposed below the slant portion and supports the footrest surface. The canister may be fixed to the subframe. In this case, the footrest surface can be supported by the subframe, while the canister can be fixed to the subframe.

The canister may be disposed to tilt along the footrest surface. In this case, the space below the slant portion can be effectively utilized.

The canister may be disposed at least in part further on an upper side than the footboard. In this case, water intrusion into the canister can be inhibited.

The straddled vehicle may further include a fuel pipe, which is disposed ahead of the leg shield and is connected to the fuel tank, and a charging tube connected to the fuel pipe and the canister. The charging tube may be disposed in part below the slant portion. In this case, the space below the slant portion can be effectively utilized as a space for disposing the charging tube.

The straddled vehicle may further include a sub-tank disposed lateral to the head pipe and a fuel pipe connecting the sub-tank and the fuel tank therethrough to each other. The canister may overlap with the sub-tank in a vehicle plan view. In this case, a space below the sub-tank can be effectively utilized as a space for disposing the canister.

Overall, according to the present invention, it is made possible to provide a straddled vehicle that a storage box, disposed below a seat, can be inhibited from being reduced in storage space.

### BRIEF DESCRIPTION OF THE DRAWINGS

FIG. 1 is a left side view of a straddled vehicle according to a preferred embodiment.
FIG. 2 is a partial left side view of the straddled vehicle, from which a vehicle body cover is detached in part.
FIG. 3 is a partial front view of the straddled vehicle, from which the vehicle body cover is detached in part.
FIG. 4 is a partial bottom view of the straddled vehicle, from which the vehicle body cover is detached in part.
FIG. 5 is a partial closeup view of FIG. 2.

### DETAILED DESCRIPTION OF EMBODIMENTS

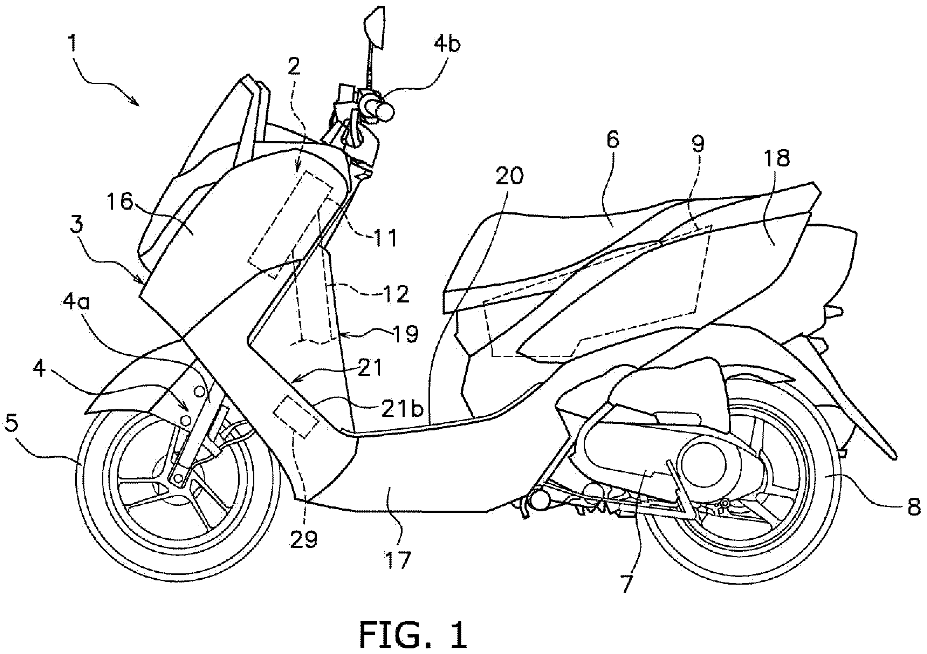

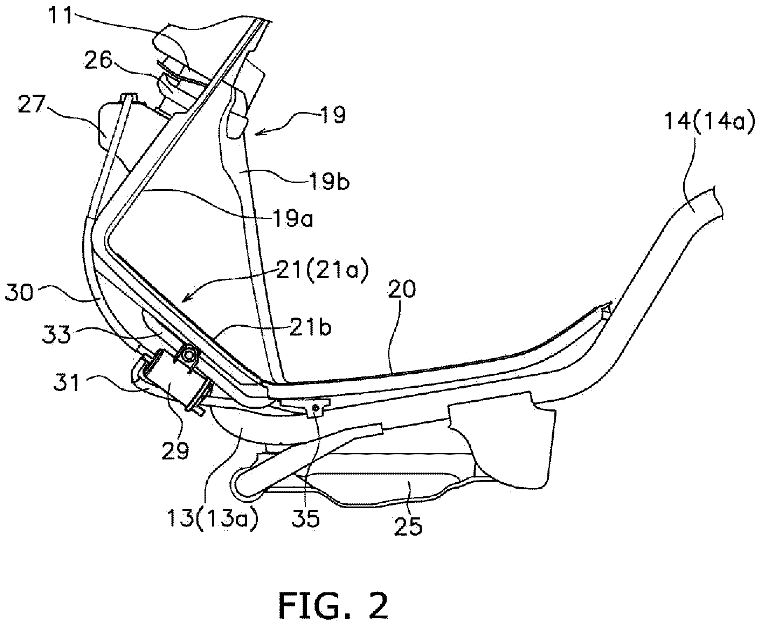

A straddled vehicle according to a preferred embodiment will be hereinafter explained with reference to drawings. FIG. 1 is a side view of a straddled vehicle 1 according to the preferred embodiment. FIG. 2 is a partial side view of the straddled vehicle 1 according to the preferred embodiment. The straddled vehicle 1 according to the present preferred embodiment is a scooter. As shown in FIG. 1, the straddled vehicle 1 includes a vehicle body frame 2, a vehicle body cover 3, a steering device 4, a front wheel 5, a seat 6, a power unit 7, a rear wheel 8, and a storage box 9. It should be noted that in the following explanation, the directional terms "front", "rear", "right", and "left" are defined as meaning front, rear, right, and left directions seen from a rider seated on the seat 6. Moreover, the teaching of the embodiments refers to a vehicle back-and-forth direction that extends in the longitudinal direction of the vehicle. The teaching of the embodiments refers to a vehicle width direction that extends in the right-left direction of the vehicle. The teaching of the embodiments refers to a vehicle up-and-down direction that extends in the vertical direction of the vehicle.

As shown in FIGS. 1 and 2, the vehicle body frame 2 includes a head pipe 11, a down frame 12, a lower frame 13, and a rear frame 14. The head pipe 11 is disposed in the center of the vehicle in the vehicle width direction. The head pipe 11 tilts down forward in a vehicle side view. The down frame 12 extends downward from the head pipe 11. The lower frame 13 is connected to a lower portion of the down frame 12.

The lower frame 13 includes a left lower frame 13a and a right lower frame (not shown in the drawings). The left lower frame 13a extends leftward and rearward from the down frame 12. The right lower frame extends rightward and rearward from the down frame 12. The right lower frame is shaped bilaterally symmetric to the left lower frame 13a.

The rear frame 14 extends rearward and upward from the lower frame 13. The rear frame 14 includes a left rear frame 14a and a right rear frame (not shown in the drawings). The left rear frame 14a extends rearward and upward from the rear end of the left lower frame 13a. The right rear frame extends rearward and upward from the rear end of the right lower frame. The right rear frame is shaped bilaterally symmetric to the left rear frame 14a.

The vehicle body cover 3 includes a front cover 16, a lower cover 17, a rear cover 18, a leg shield 19, a footboard 20, and a slant portion 21. The front cover 16 is disposed ahead of the head pipe 11 and the down frame 12.

The lower cover 17 is disposed between the front cover 16 and the rear cover 18. The lower cover 17 is disposed to cover the lower frame 13 from the surroundings. The lower cover 17 overlaps with the lower frame 13 in a vehicle plan view.

The rear cover 18 is disposed below the seat 6. The rear cover 18 is disposed to cover the rear frame 14 from the surroundings.

The leg shield 19 is disposed behind the front cover 16. The leg shield 19 is disposed behind the head pipe 11 and the down frame 12. The leg shield 19 covers the head pipe 11 and the down frame 12 from behind. The leg shield 19 is disposed ahead of the seat 6.

The leg shield 19 includes a left leg shield 19a, a right leg shield (not shown in the drawings), and a middle rear-side portion 19b. The left leg shield 19a is disposed on the left side of the middle rear-side portion 19b. The left leg shield 19a extends forward and downward. The right leg shield is disposed on the right side of the middle rear-side portion 19b. The right leg shield extends forward and downward. The middle rear-side portion 19b is disposed in the center of the vehicle in the vehicle width direction. The middle rear-side portion 19b extends in the vehicle width direction. The middle rear-side portion 19b protrudes rearward, while being disposed between the left leg shield 19a and the right leg shield. The middle rear-side portion 19b is connected at the lower end of a rear portion thereof to the footboard 20.

The footboard 20 is provided for allowing the rider to put the feet thereon. The footboard 20 is disposed on the lower cover 17. The footboard 20 overlaps with the lower frame 13 in the vehicle plan view. The footboard 20 is disposed above the lower frame 13. The footboard 20 is disposed between the leg shield 19 and the seat 6. The footboard 20 is disposed between the leg shield 19 and the rear cover 18. The footboard 20 is disposed further on the lower side and the front side than the seat 6. The footboard 20 extends in the vehicle back-and-forth direction. The footboard 20 extends rearward from the lower end of the leg shield 19. The footboard 20 has an approximately flat shape.

The slant portion 21 is disposed between the leg shield 19 and the footboard 20. The slant portion 21 is connected to the leg shield 19. In the present preferred embodiment, the slant portion 21 is integrated with the leg shield 19. The slant portion 21 may be integrated with the footboard 20. The slant portion 21 is disposed ahead of the footboard 20. The slant portion 21 slants up forward with respect to the footboard 20. The slant portion 21 extends forward and upward from the front end of the footboard 20. The slant portion 21 is disposed lateral to the middle rear-side portion 19b. The slant portion 21 overlaps with the down frame 12 in the vehicle side view. The slant portion 21 is disposed further on the front side than the lower frame 13. The slant portion 21 is disposed further on the front side than the lower cover 17.

The slant portion 21 includes a left slant portion 21a and a right slant portion (not shown in the drawings). The left slant portion 21a is disposed behind the left leg shield 19a. The left slant portion 21a is disposed laterally on the left side of the middle rear-side portion 19b. The left slant portion 21a extends rearward and downward from the lower end of the left leg shield 19a. The left slant portion 21a extends forward and upward from the front end of the footboard 20.

The left slant portion 21a includes a left footrest surface 21b (exemplary footrest surface). The upper surface of the left slant portion 21a is provided as the left footrest surface 21b. The left footrest surface 21b is provided for allowing the rider to put the left foot thereon. The left footrest surface 21b slants up forward with respect to the footboard 20. The left footrest surface 21b is made in the shape of a flat surface slanting up forward. The left footrest surface 21b is disposed to continue to the footboard 20 in the vehicle back-and-forth direction.

The right slant portion is disposed behind the right leg shield. The right slant portion is disposed laterally on the right side of the middle rear-side portion 19b. The right slant portion is shaped bilaterally symmetric to the left slant portion 21a. Because of this, the right slant portion includes a right footrest surface shaped bilaterally symmetric to the left footrest surface 21b.

The steering device 4 is supported by the vehicle body frame 2, while being turnable right and left. The steering device 4 includes a front fork 4a and a handle member 4b. The front fork 4a supports the front wheel 5 such that the front wheel 5 is made rotatable. The handle member 4b is connected to the upper end of the front fork 4a.

The seat 6 is disposed behind the leg shield 19. The seat 6 is disposed above the rear frame 14.

The power unit 7 is disposed below the seat 6. The power unit 7 has a unit swing structure. The power unit 7 supports the rear wheel 8 such that the rear wheel 8 is made rotatable.

The storage box 9 is disposed below the seat 6. The storage box 9 is covered with the rear cover 18. The storage box 9 opens upward and the opening thereof is covered with the seat 6.

As shown in FIG. 2, the straddled vehicle 1 includes a fuel tank 25, an oil filler port 26, a sub-tank 27, a fuel pipe 28, a canister 29, and a charging tube 30.

The fuel tank 25 is disposed below the footboard 20. The fuel tank 25 is disposed between the left lower frame 13a and the right lower frame. The fuel tank 25 is fixed to the vehicle body frame 2. The fuel tank 25 is disposed behind the lower end of the down frame 12. The fuel tank 25 is disposed further on the rear side than the slant portion 21.

The oil filler port 26 is disposed in the leg shield 19. The oil filler port 26 is disposed laterally on the left side of the head pipe 11 and the down frame 12. The oil filler port 26 is connected to the sub-tank 27. The oil filler port 26 is connected to the fuel tank 25 through a sub-pipe (not shown in the drawings).

The sub-tank 27 is disposed below the oil filler port 26. The sub-tank 27 is disposed laterally on the left side of the head pipe 11. The sub-tank 27 overlaps with the head pipe 11 and the down frame 12 in the vehicle side view. The sub-tank 27 overlaps with the slant portion 21 in the vehicle plan view. In the present preferred embodiment, the sub-tank 27 overlaps with the left slant portion 21a in the vehicle plan view. The sub-tank 27 is disposed ahead of the leg shield 19. The sub-tank 27 is disposed further on the upper side than the slant portion 21. The sub-tank 27 is disposed further on the inner side than the slant portion 21 in the vehicle width direction.

The fuel pipe 28 connects the sub-tank 27 and the fuel tank 25 therethrough to each other. The fuel pipe 28 is disposed on the left side of the down frame 12. The fuel pipe 28 overlaps with the down frame 12 in the vehicle side view. The fuel pipe 28 is disposed ahead of the middle rear-side portion 19b of the leg shield 19.

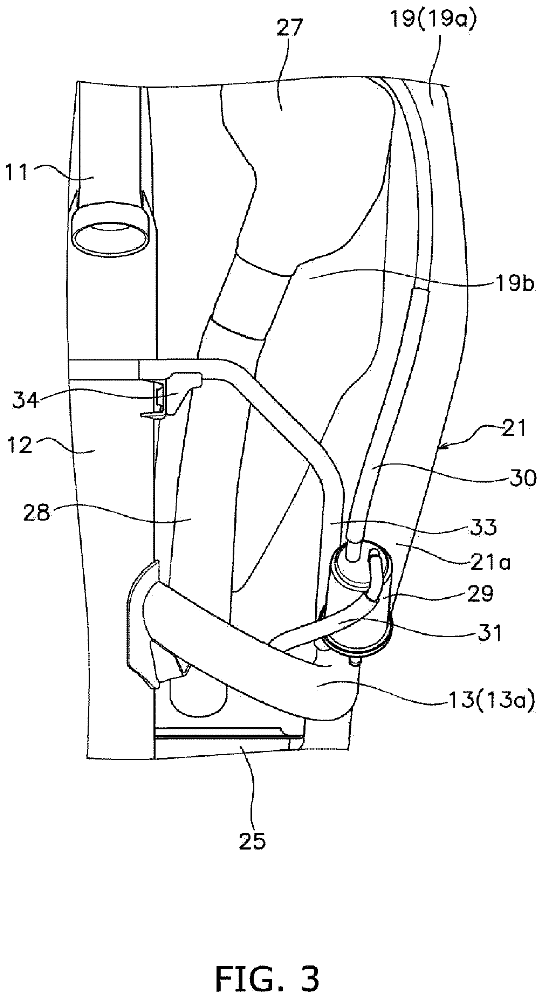

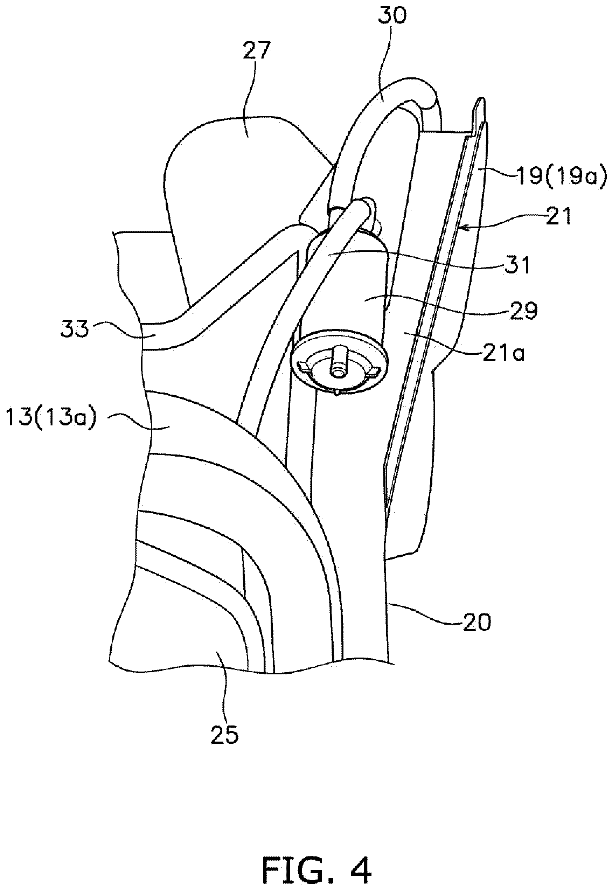

FIG. 3 is a partial front view of the straddled vehicle 1, from which the front cover 16 and the lower cover 17 are detached. FIG. 4 is a partial bottom view of the straddled vehicle 1, from which the front cover 16 and the lower cover 17 are detached.

As shown in FIGS. 2 to 4, the canister 29 is disposed below the left slant portion 21a of the slant portion 21. The canister 29 entirely overlaps with the left slant portion 21a of the slant portion 21 in the vehicle plan view. The canister 29 overlaps with the sub-tank 27 in the vehicle plan view. The canister 29 is disposed further on both the front side and the upper side than the lower frame 13. The canister 29 is disposed further on the front side than the down frame 12. The canister 29 does not overlap with the down frame 12 in the vehicle side view. The canister 29 is disposed further on the front side than the fuel pipe 28. The canister 29 does not overlap with the fuel pipe 28 in the vehicle side view.

The canister 29 is connected to the fuel tank 25. The canister 29 is connected to the fuel tank 25 through the sub-tank 27 and the fuel pipe 28. The canister 29 is disposed further on both the front side and the upper side than the fuel tank 25. The canister 29 is disposed further on the outer side than the fuel tank 25 in the vehicle width direction.

The canister 29 has a tubular shape. The canister 29 extends forward and upward in the vehicle side view. The rear end of the canister 29 is disposed further on the lower side than the front end of the canister 29. The canister 29 is disposed at least in part further on the upper side than the footboard 20. The front end of the canister 29 is disposed further on the upper side than the footboard 20. The rear end of the canister 29 is disposed further on the lower side than the footboard 20. The canister 29 is disposed further on the upper side than the rotational axis of the front wheel 5. The canister 29 is disposed to tilt along the left footrest surface 21b. The center axis of the canister 29 extends in a direction oriented along the left footrest surface 21b in the vehicle side view.

The charging tube 30 has a tubular shape. The charging tube 30 extends in the vehicle up-and-down direction. The charging tube 30 connects the canister 29 and the sub-tank 27 therethrough to each other. The charging tube 30 is connected to the fuel pipe 28 through the sub-tank 27. The charging tube 30 may be configured to connect the canister 29 and the fuel pipe 28 therethrough to each other. The charging tube 30 is disposed further on the left side than the head pipe 11. In the present preferred embodiment, the charging tube 30 is entirely disposed further on the left side than the head pipe 11.

The charging tube 30 is disposed further on the front side than the down frame 12. The charging tube 30 is disposed in part below the left slant portion 21a of the slant portion 21. The charging tube 30 overlaps in part with the left slant portion 21a of the slant portion 21 in the vehicle plan view. The charging tube 30 extends in part along the left slant portion 21a in the vehicle plan view. A purge tube 31 is connected to the canister 29. The purge tube 31 has a tubular shape. The purge tube 31 extends in the back-and-forth direction. The purge tube 31 extends rearward from the canister 29 along the lower frame 13. The purge tube 31 overlaps in part with the left slant portion 21a of the slant portion 21 in the vehicle plan view.

The vehicle body frame 2 includes a subframe 33. The subframe 33 is disposed above the lower frame 13. The subframe 33 is disposed ahead of the down frame 12 and the leg shield 19. The subframe 33 is disposed below the slant portion 21. The subframe 33 overlaps with the left slant portion 21a and the right slant portion in the vehicle plan view. The subframe 33 is disposed in part to slant along the left slant portion 21a in the vehicle side view. The subframe 33 is disposed in part to slant along the right slant portion in the vehicle side view. The subframe 33 supports the left footrest surface 21b and the right footrest surface.

The subframe 33 is fixed to the down frame 12 through one or more brackets 34 shown in FIG. 3. The subframe 33 is fixed to the lower frame 13. The subframe 33 is fixed to the left lower frame 13a through a bracket 35 shown in FIG. 2. The subframe 33 is fixed to the right lower frame through a bracket (not shown in the drawings).

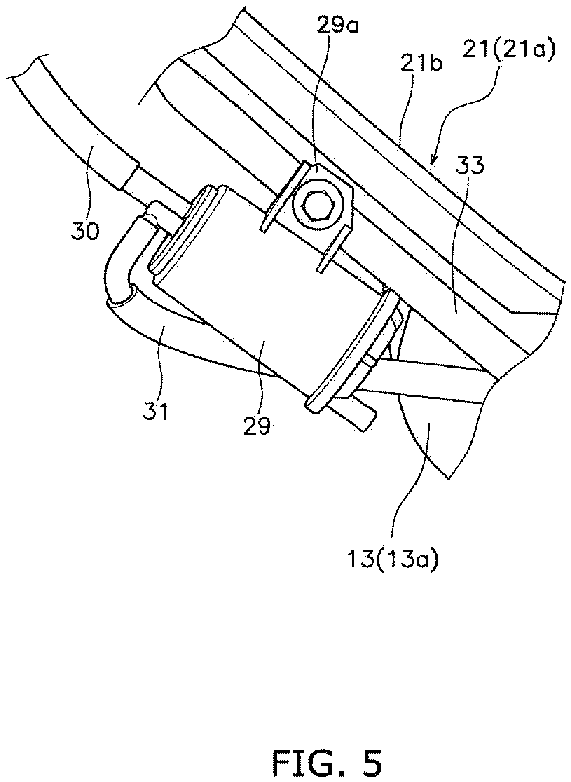

As shown in FIG. 5, the canister 29 is fixed to the subframe 33. The canister 29 includes a fixation portion 29a. The fixation portion 29a protrudes upward from the outer peripheral surface of the canister 29. The fixation portion 29a includes a through hole penetrating therethrough in the right-and-left direction. The canister 29 is fastened at the fixation portion 29a to the subframe 33 by a bolt.

In the straddled vehicle 1 according to the present preferred embodiment explained above, the canister 29 is disposed below the slant portion 21 disposed between the leg shield 19 and the footboard 20; hence, the storage box 9, disposed below the seat 6, can be inhibited from being reduced in storage space in comparison with a configuration that the canister 29 is disposed below the storage box 9. Besides, a space below the slant portion 21 including the left footrest surface 21b can be effectively utilized; simultaneously, the rider is enabled to put the left foot not only on the footboard 20 but also on the left footrest surface 21b of the left slant portion 21a.

One preferred embodiment has been explained above. Accordingly, the straddled vehicle 1 is a scooter. Alternatively, the straddled vehicle is another type of vehicle such as an underbone. The canister 29 may be changed in shape. The canister 29 may be configured to be disposed below the right slant portion of the slant portion 21.

### REFERENCE SIGNS LIST

2: Vehicle body frame, 6: Seat, 9: Storage box, 11: Head pipe, 19: Leg shield, 20: footboard, 21: Slant portion, 21b: Left footrest surface, 25: Fuel tank, 27: Sub-tank, 29: Canister, 30: Charging tube, 33: Subframe

## Claims

1. A straddled vehicle (1) comprising:
a vehicle body frame (2) including a head pipe (11);
a leg shield (19) disposed behind the head pipe (11) with regards to a vehicle back-and-forth direction;
a seat (6) disposed behind the leg shield (19) with regards to the vehicle back-and-forth direction;
a storage box (9) disposed below the seat (6) with regards to a vehicle up-and-down direction;
a footboard (20) disposed between the leg shield (19) and the seat (6);
a slant portion (21) including a footrest surface (21b), the slant portion (21) is disposed between the footboard (20) and the leg shield (19), the slant portion (21) is slanting up forward with respect to the footboard (20) with regards to the vehicle back-and-forth direction and the vehicle up-and-down direction;
a fuel tank (25) disposed below the footboard (20) with regards to the vehicle up-and-down direction; and
a canister (29) disposed below the slant portion (21) with regards to the vehicle up-and-down direction, the canister (29) is connected to the fuel tank (25).

2. The straddled vehicle (1) according to claim 1, wherein the vehicle body frame (2) includes a subframe (33) disposed below the slant portion (21), the subframe (33) being configured to support the footrest surface (21b), and
the canister (29) is fixed to the subframe (33).

3. The straddled vehicle (1) according to claim 1 or 2, wherein the canister (29) is disposed to tilt along the footrest surface (21b).

4. The straddled vehicle (1) according to any one of claims 1 to 3, wherein the canister (29) is disposed at least in part further on an upper side than the footboard (20) with regards to the vehicle up-and-down direction.

5. The straddled vehicle (1) according to any one of claims 1 to 4, further comprising:
a fuel pipe (28) disposed ahead of the leg shield (19), the fuel pipe (28) is connected to the fuel tank (25); and
a charging tube (30) connected to the fuel pipe (28) and the canister (29), wherein the charging tube (30) is disposed in part below the slant portion (21) with regards to the vehicle up-and-down direction.

6. The straddled vehicle (1) according to any one of claims 1 to 4, further comprising:
a sub-tank (27) disposed lateral to the head pipe (11) with regards to a vehicle width direction; and
a fuel pipe (28) configured to connect the sub-tank (27) and the fuel tank (25), wherein
the canister (29) overlaps with the sub-tank (27) in a vehicle plan view.
